# EUROPÄISCHE PATENTSCHRIFT

(11) **EP 3 256 827 B1**
(45) Veröffentlichungstag und Bekanntmachung des Hinweises auf die Patenterteilung: **28.11.2018**
(21) Anmeldenummer: 16702548.5
(22) Anmeldetag: 02.02.2016
(51) Int. Cl.: G01K 17/00

(54) **THERMOELEKTRISCHER SENSOR UND HERSTELLUNGSVERFAHREN**
THERMOELECTRIC SENSOR AND PRODUCTION METHOD
CAPTEUR THERMOÉLECTRIQUE ET PROCÉDÉ DE FABRICATION

(30) Priorität: 09.02.2015 CH 1622015
(43) Veröffentlichungstag der Anmeldung: 20.12.2017
(73) Patentinhaber: greenTEG AG, 8005 Zurich (CH)
(72) Erfinder: SCHWYTER, Etienne, 8055 Zürich (CH); ZAHNER, Michele, 8037 Zürich (CH); DRÖSCHER, Susanne, 8004 Zürich (CH); HELBLING, Thomas, 8500 Frauenfeld (CH)
(74) Vertreter: Schneider Feldmann AG Patent- und Markenanwälte
(86) Internationale Anmeldenummer: PCT/EP2016/052131
(87) Internationale Veröffentlichungsnummer: WO 2016/128247

(56) Entgegenhaltungen:
- EP-A2- 1 073 126
- WO-A2-2014/102242
- US-A- 4 197 738

## Beschreibung

### Technisches Gebiet

Die vorliegende Erfindung beschreibt einen thermoelektrischen Sensor zur Messung von Thermospannungen mit einer Bestrahlungsseite und einer Montageseite, umfassend eine Mehrzahl von Thermoelementen mit Messübergängen, welche durch Übergänge einer ersten Metalllage und einer zweiten Metalllage jeweils zu einer weiteren Metalllage übergehend gebildet sind, wobei die beiden Metalllagen eine elektrisch isolierende Matrixlage sandwichartig umgeben, sowie ein Verfahren zur Herstellung eines thermoelektrischen Sensors.

### Stand der Technik

Es sind verschiedene thermoelektrische Sensoren zur Messung elektromagnetischer Strahlung oder von Wärmeflüssen bzw. Wärmeströmen bekannt, die in verschiedenen Gebieten der Industrie eingesetzt werden. Als Strahlungssensoren, welche durch Messung der Temperaturdifferenz bzw. des Wärmeflusses Aussagen über die eingestrahlte Strahlungsleistung, beispielsweise Laserleistung, erlauben, können Wärmeflusssensoren eingesetzt werden.

Beispielsweise können solche Strahlungssensoren in Pyranometern, Pyrheliometern oder in Laserleistungsmessgeräten eingesetzt werden, beispielsweise zur Kontrolle von Laserstrahlen im Bereich der Prozesstechnik beim Schweissen oder Schneiden oder auch in der Medizintechnik. Durch Bestrahlung einer Bestrahlungsseite, werden unterschiedliche Sensorbereiche unterschiedlich erwärmt, wobei durch Ausnutzung des thermoelektrischen Effektes Temperaturen und Temperaturunterschiede gemessen werden können, aus welchen dann auf die Bestrahlungsleistung zurückgeschlossen werden kann. Wird ein Wärmeflusssensor mit einer Strahlungsabsorptionslage ausgestattet, kann er strahlungsseitig so verändert werden, dass die spektrale Strahlungsabsorption in geeigneten Wellenlängenbereichen hoch ist und er als Strahlungssensor eingesetzt werden kann. Entsprechend dient die Strahlungsabsorptionslage zur Erhöhung der Robustheit des Sensors.
In der US434960 wird ein thermoelektrischer Sensor in Form eines Wärmeflusssensors beschrieben, welcher aus einer gelochten Leiterplatte, nach Durchführung von Metallbeschichtungen mittels unterschiedlicher Beschichtungsmethoden und Ätzprozesse herstellbar ist, wobei eine Vielzahl von Thermoelementen flächig verteilt angeordnet wird. Mittels des in der US434960 vorgestellten Herstellungsverfahrens ist es bereits möglich gewesen, derartige thermoelektrische Sensoren automatisiert mit einer grossflächigen Verteilung der Thermoelemente kostengünstig herzustellen. Das Herstellungsverfahren umfasst teilweise aufwändige bzw. umständliche Beschichtungsschritte, damit ausreichend dicke Metalllagen in der gewünschten alternierenden Form resultieren, wobei die Herstellung einer Strahlungsabsorptionsschicht nicht einmal erwähnt ist. Wenn man derartige Wärmeflusssensoren zur Kontrolle von Strahlung, beispielsweise Laserstrahlen einsetzen möchte, muss die Bestrahlungsseite die Laserstrahlen genügend absorbieren können und zusätzlich vor der energiereichen Laserstrahlung geschützt werden, damit sensitive, reproduzierbare und robuste Strahlungssensoren resultieren können. Die Wahl eines möglichst stark hitzebeständigen Materials als Matrixmaterial der Leiterplatte reicht für den Einsatz als langlebiger Strahlungssensoren allein nicht aus. Ausserdem muss vor Auftragung der Strahlungsabsorptionslage eine zusätzliche ebene Schicht zur Fixierung auf der Bestrahlungsseite aufgebracht werden, was die Messwerterfassung des Sensors langsamer macht.

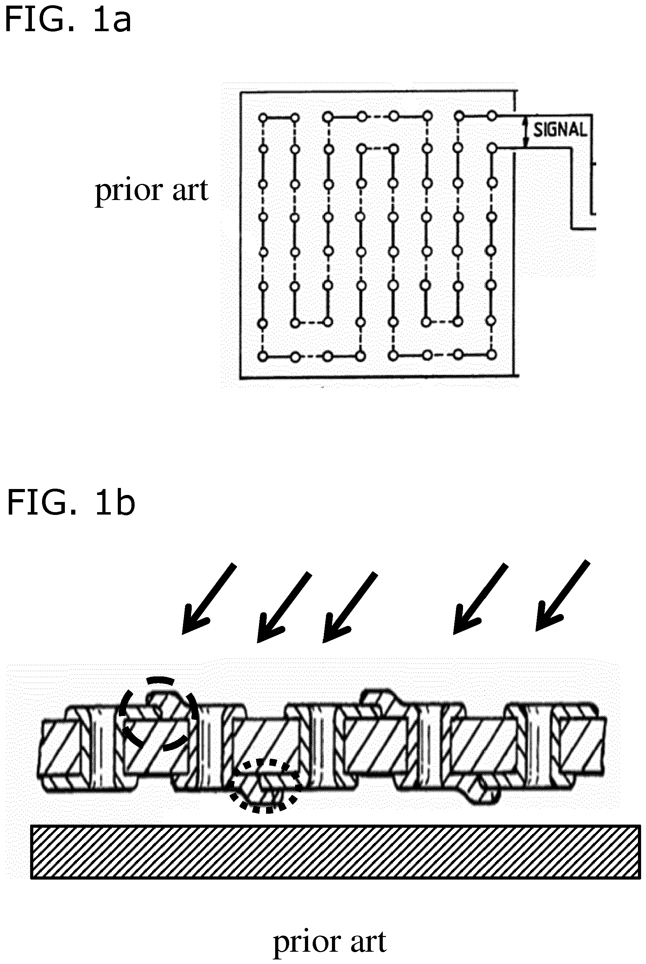

Aus der GB2218261 sind weit verbreitete thermoelektrische Sensoren bekannt. Beispielhaft ist in Figur 1a eine Aufsicht auf eine Bestrahlungsseite eines derartigen Wärmeflusssensors dargestellt. Grossflächig sind in einer Matrixlage einer Leiterplatte mehrere Thermoelemente, umfassend unterschiedliche Metallabschnitte mit jeweils einem Messübergang, sogenannte Junctions bildend, in Reihe geschaltet angeordnet. Mittels der Messübergänge können Temperaturen an verschiedenen Positionen und Temperaturunterschiede zwischen Bestrahlungsseite und Montageseite des Wärmeflusssensors gemessen werden. Die Schnittdarstellung gemäss Figur 1b zeigt, dass im Bereich von Durchgangslöchern in der Matrixlage, die unterschiedlichen Metallabschnitte, die Messübergänge bildend, angeordnet sind. Die Messübergänge sind dabei auf unterschiedlichen Seiten der Matrixlage alternierend angeordnet, wobei unebene Oberflächen der Bestrahlungsseite und der Montageseite entstehen. Die Herstellung solcher thermoelektrischer Sensoren findet mit speziellen Siebdruckverfahren teilweise unter Vakuumbedingungen statt, wobei ausgenutzt wird, dass die Metalllagen teilweise durch die Durchgangslöcher in der Matrixlage wandernd, an den Innenwänden der Durchgangslöcher verteilt beschichtet werden.
Das beschriebene Herstellungsverfahren nutzt unterschiedliche Beschichtungsmethoden zur Erreichung der gewünschten Metallabscheidungen und Messübergänge, wobei die Thermoelemente säulenartig die Matrixlage durchsetzend ausgebildet werden. Soll ein solcher Wärmeflusssensor als Strahlungssensor eingesetzt werden, dann ist eine zusätzliche Schicht ohne Löcher nötig, auf welche die Strahlungsabsorptionslage homogen aufgetragen werden kann. Da diese zusätzliche Schicht sowohl thermische Masse und thermischen Widerstand als auch durch die Befestigung eines Klebers einen zusätzlichen thermischen Widerstand dem Gesamtsystem zufügt, wird die Ansprechzeit eines solchen Strahlungssensors erhöht. Durch die Perforation des Wärmeflusssensors ist die Aufbringung einer Strahlungsabsorptionslage direkt auf die Sensoroberfläche schwierig. Da die Oberfläche der Montageseite uneben ist, ist die Anordnung eines Kühlkörpers ebenfalls schwierig. Es müsste eine weitere zusätzliche ebene Schicht zur Fixierung des Kühlkörpers aufgebracht werden, was ebenfalls die Messwerterfassung des Sensors negativ beeinflusst. Der Einsatz eines solchen Wärmeflusssensors als Strahlungssensor scheint nur bedingt möglich.

Bislang ist kein Strahlungssensor bekannt, welcher sich einfach automatisiert und kostengünstig herstellen lässt. Es ist ebenfalls nicht bekannt, wie ein Strahlungssensor unkompliziert homogen reproduzierbar mit einer Strahlungsabsorptionslage beschichtet herstellbar und zusätzlich noch einfach mit einem Kühlkörper optimal verbindbar ist. Dies ist aber zwingend notwendig, um möglichst schnelle, reproduzierbare, sensitive und robuste Strahlungssensoren zu erreichen.

Auch die aus der US4197738 bekannten Wärmeflusssensoren sind nicht einfach direkt mit einer Strahlungsabsorptionslage auf der Bestrahlungsseite ausstattbar. Beschichtet man den Wärmeflusssensor auf seiner Bestrahlungsseite mit einer Absorberschicht mittels eines geeigneten Verfahrens wie Sprühbeschichtung, Pulverbeschichtung, Siebdruck oder Bedampfungsverfahren, muss für optimale Sensoreigenschaften gewährleistet sein, dass die Beschichtung nur im Bereich der Oberfläche stattfindet. Dazu müsste der Fachmann ein weiteres geeignetes Beschichtungsverfahren wählen oder eventuell einen speziellen Kühlkörper vorher auf der Montageseite des Strahlungssensors montieren, der die Beschichtung auf die Oberfläche begrenzt. Das Herstellungsverfahren würde auch verkompliziert und die Ansprechzeit des Sensors erhöht wenn eine Abdeckschicht auf der Bestrahlungsseite aufgebracht würde, bevor die Strahlungsabsorptionslage aufgebracht wird.

### Darstellung der Erfindung

Die vorliegende Erfindung hat sich zur Aufgabe gestellt thermoelektrische Sensoren in Form von Strahlungssensoren bereitzustellen, welche einfach und kostengünstig herstellbar sind, elektromagnetische Strahlung, beispielsweise Laserstrahlung, effizient absorbieren, sowie schnelle Signalanstiegszeiten aufweisen.

Es war ausserdem die Aufgabe der Erfindung, ein Herstellungsverfahren für Strahlungssensoren bereitzustellen, welches eine vereinfachte reproduzierbare und kostengünstige Herstellung von Strahlungssensoren basierend auf Wärmeflusssensoren erlaubt, wobei vor allem auch die Aufbringung einer Strahlungsabsorptionslage vereinfacht ist.

Durch das erfindungsgemässe Herstellungsverfahren lassen sich robuste Strahlungssensoren herstellen, deren Ansprechgeschwindigkeit und Sensitivität erleichtert auf den Verwendungszweck anpassbar ist.

Es sind Strahlungssensoren erreichbar, welche eine grossflächige Verteilung der Thermoelemente bis in den Randbereich des Strahlungssensors aufweisen, wobei die Strahlungsabsorptionslage reproduzierbar einfach die gesamte Bestrahlungsseite des thermoelektrischen Sensors bedeckt.

### Kurze Beschreibung der Zeichnungen

Bevorzugte Ausführungsbeispiele des Erfindungsgegenstandes eines thermoelektrischen Sensors, sowie eines Herstellungsverfahrens werden nachstehend im Zusammenhang mit den anliegenden Zeichnungen beschrieben.
- Figur 1a: zeigt eine Aufsicht auf einen Wärmeflusssensor gemäss Stand der Technik, während
- Figur 1b: eine Schnittansicht des Wärmeflusssensors gemäss Stand der Technik zeigt.
- Figur 2a: zeigt eine Schnittansicht eines erfindungsgemässen Strahlungssensors mit angedeuteten Messübergängen zwischen Metalllagen bestehend aus unterschiedlichen Metallen, während
- Figur 2b: eine teilweise Aufsicht auf die Bestrahlungsseite O eines Strahlungssensors zeigt.
- Figuren 3a) bis 3f): zeigen jeweils Schnittansichten der einzelnen Schritte des erfindungsgemässen Herstellungsverfahrens eines Strahlungssensors, während
- Figuren 4a) und 4b): Schnittansichten des Strahlungssensors nach Beschichtung mit einer Strahlungsabsorptionslage und nach Montage auf einem Kühlkörper zeigen.

### Beschreibung

Ein erfindungsgemässer thermoelektrischer Sensor 10 wird von einem Körper aus mehreren Lagen unterschiedlichen Materials gebildet und weist mehrere Thermoelemente jeweils mit einem Messübergang M auf, an welchen mittels Abgriff einer Thermospannung unterschiedliche Temperaturen auf einer Bestrahlungsseite O und einer Montageseite U ermittelbar sind. Je nachdem auf welcher Seite die Messübergänge M angeordnet sind, werden unterschiedliche Thermospannungen und damit verschiedene Temperaturen gemessen. Beim Messübergang M befindet sich jeweils ein Übergang von einem Metall zu einem anderen Metall bzw. Legierung. Ein derartiger thermoelektrischer Sensor 10 kann auch als Thermosäule mit mehreren Thermoelementen bezeichnet werden.

Durch möglichst grossflächige laterale Verteilung der Thermoelemente entlang des Körpers bzw. im Körper des thermoelektrischen Sensors 10 können Wärmeflüsse, die an verschiedenen Stellen des thermoelektrischen Sensors 10 auftreten, gemessen werden. Um möglichst gute Messergebnisse zu erreichen, sollten möglichst viele Thermoelemente mit Messübergängen M grossflächig verteilt sein, damit der thermoelektrische Effekt möglichst oft ausgenutzt werden kann. Dem Fachmann sind einsetzbare Metalle bzw. Metalllegierungen bekannt. Hier wird unter einer Metalllage auch eine Metalllegierungslage verstanden.

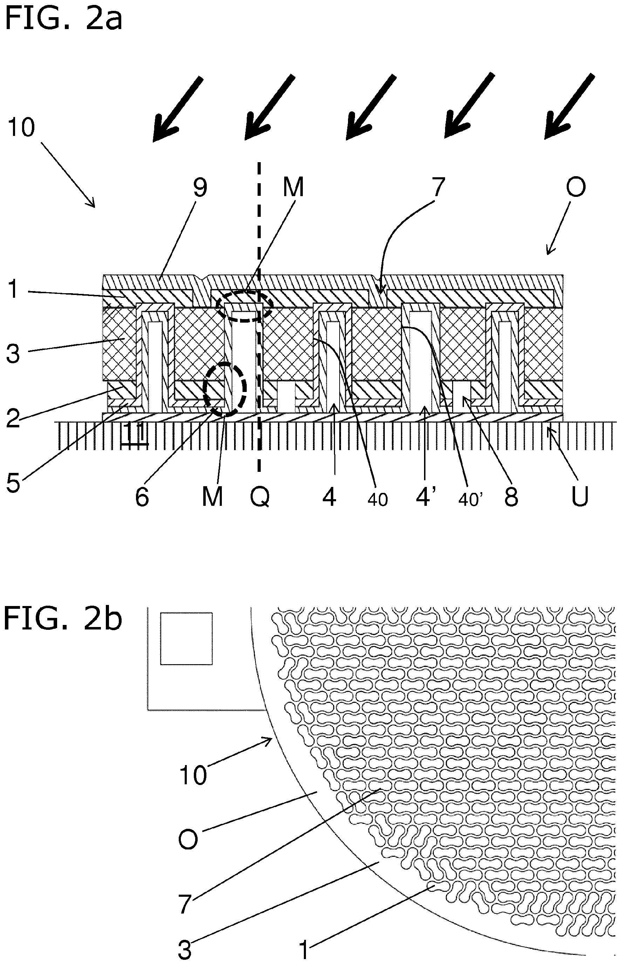

Der thermoelektrische Sensor 10 wird hier beispielhaft als Strahlungssensor 10 eingesetzt, wobei einfallende elektromagnetische Strahlung durch die Pfeile in Figur 2a angedeutet ist. Durch die Einstrahlung, beispielsweise einer Laserstrahlung von der Bestrahlungsseite O entsteht ein Temperaturgradient im Körper des Strahlungssensors 10 und unterschiedliche Temperaturen sind an den Messübergängen M im Bereich der Bestrahlungsseite O und der Montageseite U messbar.

Der Strahlungssensor 10 weist eine elektrisch isolierende Matrixlage 3 auf, welche zum einen von einer ersten Metalllage 1 zur Bestrahlungsseite O hin bedeckt ist und zum anderen von einer zweiten Metalllage 2 zur Montageseite U hin bedeckt ist. Es sind erste Sacklöcher 4 und zweite Sacklöcher 4' von der Montageseite U in Richtung Bestrahlungsseite O hin orientiert die Matrixlage 3 vollständig querend in Querrichtung Q angeordnet. Die ersten und zweiten Sacklöcher 4, 4' sind dabei unterschiedlich beschichtet.

Die zweite Metalllage 2 und die Innenwände 40 der ersten Sacklöcher 4 bedeckend, ist eine dritte Metalllage 5 angeordnet. Diese dritte Metalllage 5 bedeckt die zweite Metalllage 2 und die Innenwände 40 dabei direkt. Die bedeckten Innenwände 40 der ersten Sacklöcher 4 weiter sukzessive bedeckend ist eine vierte Metalllage 6 angeordnet, welche die dritte Metalllage 5 und die zweite Metalllage 2 bedeckt. Wie in Figur 2a gezeigt, ist auf die Innenwände 40' der zweiten Sacklöcher 4' nur die vierte Metalllage 6 aufgebracht.

Je nach verwendetem Beschichtungsverfahren kann auch die erste Metalllage 1 mit der dritten Metalllage 5 und/oder der vierten Metalllage 6 bedeckt sein, was aber nicht zwingend nötig ist.

Die Messübergänge M sind hier von der ersten Metalllage 1 zur vierten Metalllage 6 bzw. von der zweiten Metalllage 2 bzw. dritten Metalllage 5 zur vierten Metalllage 6 im Körper des thermoelektrischen Sensors 10 zwischen erster Metalllage 1 und zweiter Metalllage 2 ausgebildet.

Beispielhaft wurde hier Kupfer als Material für die erste, zweite und dritte Metalllage 1, 2, 5 und Nickel für die vierte Metalllage 6 benutzt. Dadurch wird eine Mehrzahl von Cu/Ni-Messübergängen M erreicht.

Der Temperaturgradient über den Strahlungssensor 10 führt zu einer Thermospannung entlang jedes einzelnen Thermoelements. Die Summe der Thermospannungen jedes Thermoelements wird mit einer nicht dargestellten Messelektronik gemessen. Um den Strahlungssensor 10 mit einem nicht dargestellten Verstärker bzw. der Messelektronik und Messverkabelung zu versehen, sind Unterbrüche 7 zur elektrischen Kontaktierung in der ersten Metalllage 1 in Richtung Matrixlage 3 und Unterbrüche 8 zur elektrischen Kontaktierung in der zweiten Metalllage 2 in Richtung Matrixlage 3, die jeweilige Metalllage 1, 2 vollständig querend, angebracht. Durch die Unterbrüche 7, 8 werden die Thermoelemente elektrisch in Serie geschaltet. Die Unterbrüche 7, 8 können dabei mit bekannten Mitteln der Leiterplattenherstellung erstellt werden und dienen zur elektrischen Verbindung.

Der Strahlungssensor 10 weist einen von der Montageseite U durch die Sacklöcher 4, 4' offen gestalteten Körper auf, wobei eine säulenartige Struktur in Querrichtung Q ausgedehnt ausgebildet sind. Wärmeenergie kann entsprechend in Querrichtung Q von der Bestrahlungsseite O zur Montageseite U hin einfach abfliessen. Der Körper des Strahlungssensors 10 weist eine bis auf die Sacklöcher 4, 4' eben ausgebildete Montageseite U auf, wobei die Sacklöcher 4, 4' Öffnungen des Körpers zur Montageseite U darstellen. Da von der Bestrahlungsseite O keine Öffnungen in den Körper des Strahlungssensors 10 vorgesehen sind und keine Zugänge zur Matrixlage 3 von der Bestrahlungsseite O vorhanden sind, wird der Körper des Strahlungssensors 10 als zur Bestrahlungsseite O geschlossen bezeichnet.

Aufgrund der Bauform kann ein gezeigter Strahlungssensor 10 in einem Massenherstellungsverfahren kostengünstig hergestellt werden, wobei Messgeschwindigkeit und Sensitivität nebst Variation der Dicke der Matrixlage 3 auch durch die Anpassung der Formgebung der Messübergänge M anpassbar sind. Die Durchmesser der Sacklöcher 4, 4', sowie die Dicken der Metalllagen 1, 2, 5, 6 können unterschiedlich gross ausgeführt sein.

Soll der Strahlungssensor 10 als Laserleistungssensor verwendet werden, so ist vor allem eine hohe Breitbandabsorption und Robustheit gegen Laserstrahlung zu erreichen, was hier erreicht wird. Kohlendioxidlaser mit einer elektromagnetischen Wellenlänge von ungefähr 10.6 um, beispielsweise bekannt im Bereich Laserschneiden, werden heute mit Strahlleistungen bis zu einigen Kilowatt verwendet. Zur Leistungsmessung eines derartigen Laserstrahls, beispielsweise zur Nachregelung der Strahlleistung, sollte der Strahlungssensor 10 vor der Bestrahlung eine zusätzliche Strahlungsabsorptionslage 9, die erste Metalllage 1 bzw. die Bestrahlungsseite O bedeckend aufweisen. Andernfalls kann die Bestrahlungsseite O inhomogene und nicht reproduzierbare Strahlabsorptionseigenschaften aufweisen und führt die thermische Belastung aufgrund der Laserbestrahlung schnell zu einer Zerstörung des Strahlungssensors 10. Die Strahlungsabsorptionslage 9 bedeckt hier vollflächig die Bestrahlungsseite O und kann etwa die gleiche Lagendicke wie die erste Metalllage 1 aufweisen. Es ist eine flache und homogen Beschichtung erreicht, wobei aufgrund des geschlossenen Körpers des Strahlungssensors 10 zur Bestrahlungsseite O eine Beschichtung vereinfacht möglich ist.

Zur weiteren Steigerung der Widerstandsfähigkeit kann ein Kühlkörper 11 auf der Montageseite U des Strahlungssensors 10 angebracht sein, womit Wärme abgeleitet wird. Der Kühlkörper 11 ist in der Regel über eine geeignete thermisch leitfähige und elektrisch isolierende Verbindungsschicht mit dem Sensor 10 verbunden beispielsweise durch eine Klebeschicht K.

Die Aufsicht auf die Bestrahlungsseite O des Strahlungssensors 10 gemäss Figur 2b zeigt die grossflächige Verteilung der Thermoelemente und die Unterbrüche 7 in der ersten Metalllage 1. Zur besseren Darstellung ist die Strahlungsabsorptionslage 9 weggelassen worden. Die zur Bestrahlungsseite O geschlossene Gestaltung des Körpers des Strahlungssensors 10 ist deutlich erkennbar, welche eine vereinfachte Beschichtung mit der Strahlungsabsorptionslage 9 gestattet.

Um die oben beschriebenen thermoelektrischen Sensoren 10, insbesondere zur Verwendung als Strahlungssensoren herzustellen, wird ein mögliches Herstellungsverfahren im Folgenden beschrieben.

Dafür geht man von einer Leiterplatte 0, umfassend die Matrixlage 3, aus, wobei die erste Metalllage 1 und die zweite Metalllage 2 jeweils auf einander gegenüberliegenden Oberflächen der Leiterplatte 0, auf der späteren Bestrahlungsseite O und der Montageseite U, aufgebracht sind. Die Lagendicken der ersten und zweiten Metalllage 1, 2 liegen üblicherweise im Bereich von 10 µm bis 150 µm. Die Beschichtung der Leiterplatten 0 mit Metallen ist dem Fachmann bekannt. Hier wird beispielhaft die erste und die zweite Metalllage 1, 2 jeweils aus Kupfer hergestellt, wobei auch die Lagendicken identisch sind.

Das Material der Matrixlage 3 muss ein elektrisch isolierendes und ein möglichst temperaturresistentes Material sein. Bevorzugt wird ein faserverstärkter Kunststoff, beispielsweise ein Glasfasergewebe oder ein Glasvlies getränkt in Epoxidharz oder Polyimid oder Teflon mit Glasfasern verstärkt oder ein Keramikmaterial, wie Aluminiumoxid gewählt.

### 1. Sacklochbohrungsschritt

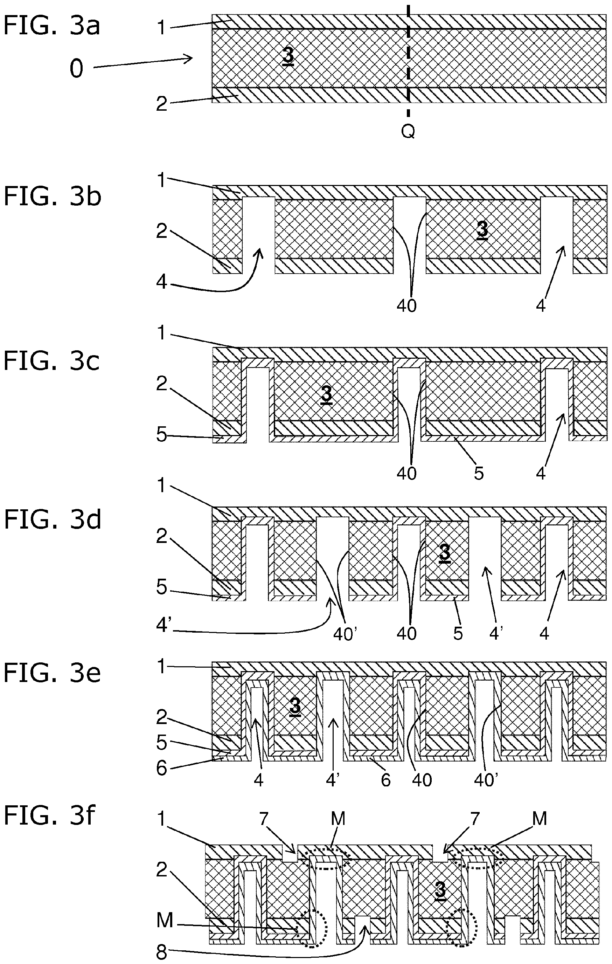

In die beschichtete Leiterplatte 0 werden die ersten Sacklöcher 4, von der Montageseite U in Richtung Bestrahlungsseite O verlaufend, die zweite Metalllage 2 und die Matrixlage 3 vollständig querend, angeordnet. Dies kann mit geeigneten Lasern oder durch mechanisches Bohren durchgeführt werden. Dem Fachmann sind aus dem Bereich der Leiterplattenherstellung Verfahren zur Erzeugung von Sacklöchern bekannt. Wie in Figur 3b dargestellt, können die ersten Sacklöcher 4 teilweise bis in die erste Metalllage 1 führend eingebracht sein. Es darf aber in keinem Fall ein Durchgangsloch erzeugt werden.

### 1. Beschichtungsschritt

Anschliessend wird die aufgebohrte Leiterplatte 0 von der Montageseite U oder Sensorunterseite U mit einer dritten Metalllage 5 beschichtet. Diese dritte Metalllage 5 bedeckt die zweite Metalllage 2 und die Innenwände 40 der ersten Sacklöcher 4. Wie in der Leiterplattenbeschichtung bekannt, wird hier eine Kupferbeschichtung mittels chemischen Kupferbeschichtungsprozess (stromlos), gefolgt von einer galvanischen stromgeführten Kupferabscheidung durchgeführt.

Das Resultat ist die in Figur 3c dargestellte einfache Beschichtung der Innenwände 40 der ersten Sacklöcher 4 mit einer Kupferlage 5 und die doppelte Kupferbeschichtung der zweiten Metalllage 2.

Wird ein chemischer Beschichtungsprozess benutzt, wird optional auch die dritte Metalllage 5 zusätzlich auf die erste Metalllage 1 aufgebracht, indem eben auch die Bestrahlungsseite O mit beschichtet wird. Dieser Vorgang ist hier nicht dargestellt.

### 2. Sacklochbohrungsschritt

Anschliessend werden nun die zweiten Sacklöcher 4' ebenfalls von der Montageseite U in Richtung Bestrahlungsseite O verlaufend, durch bekannte Mittel, die dritte Metalllage 5, die zweite Metalllage 2 sowie die Matrixlage 3 vollständig querend, eingebracht. Auch hier können die zweiten Sacklöcher 4' bis teilweise in die erste Metalllage 1 reichend, eingebohrt sein, solange die erste Metalllage 1 zur Bestrahlungsseite O hin geschlossen bleibt. Damit ist ein thermoelektrischer Sensor 10 mit einem zur Bestrahlungsseite O geschlossenen Körper erreichbar, was zwingend notwendig ist.

### 2. Beschichtungsschritt

Nach dem zweiten Sacklochbohrungsschritt, findet eine Beschichtung von der Montageseite U aus unter Ausbildung einer vierten Metalllage 6 statt, dessen Resultat in Figur 3e dargestellt ist. Die vierte Metalllage 6 bedeckt flächig die Innenwände 40' der zweiten Sacklöcher 4' direkt, sowie die Abschnitte mit der vorher aufgebachten dritten Metalllage 5 entlang der Innenwände 40 der ersten Sacklöcher 4 und auf der bedeckten zweiten Metalllage 2. Zur Bildung der Messübergänge M, sind Kontaktstellen zwischen erster Metalllage 1 und vierter Metalllage 6, sowie zwischen zweiter Metalllage 2 und vierter Metalllage 6 ausgebildet. Die Messübergänge M aus verschiedenen Metallen bilden die Thermoelemente an denen unterschiedliche Spannungen aufgrund von Temperaturunterschieden messbar sind.

Sollte optional in einer chemischen Beschichtung die dritte Metalllage 5 auch auf die erste Metalllage 1 von der Bestrahlungsseite O her aufgebracht worden sein, dann kann optional auch die vierte Metalllage 6 von der Bestrahlungsseite O auf die dritte Metalllage 5 und erste Metalllage 1 zusätzlich aufgebracht werden, was hier aber nicht gezeigt ist.

Die vierte Metalllage 6 ist hier aus Nickel gewählt. Die Nickelbeschichtung wird optimaler weise durch einen chemischen Beschichtungsschritt erreicht, woran optional eine galvanische Abscheidung angeschlossen werden kann.

Um die Thermoelemente umfassend unterschiedliche Metalle und Messübergänge elektrisch alternierend in Serie zu schalten, werden in einem Ätzprozess Unterbrüche 7 in die erste Metalllage 1 auf der Bestrahlungsseite O eingebracht. Von der Montageseite U werden zudem Unterbrüche 8 in die zweite Metalllage 2 bzw. die dritte 5 und vierte Metalllage 6 eingebracht, welche die Metalllagen 1, 2, 5, 6 in der Ebene unterteilen, sodass Kurzschlüsse vermieden werden und die Thermospannungen der Thermoelemente messbar sind. Die Unterbrüche 7, 8 können mittels photolitographischer Strukturierung und einem anschliessenden Ätz-Schritt oder mittels Laserstrahl oder einer Kombination von photolithographischer Strukturierung, Laserstrahl und Ätz-Schritt geschaffen werden. Dabei müssen die Unterbrüche 7, 8 zwingend bis zur elektrisch isolierenden Matrixlage 3 reichen.

Wenn für die Schaffung der Unterbrüche 7, 8 ein Laserschneidverfahren genutzt wird, sind geringe Einschnitte in die Matrixlage 3, wie in Figur 3f gezeigt, üblich. Derartige Einschnitte stören nicht, entscheidend ist aber, dass keine Durchgänge auf Höhe der ersten und/oder zweiten Sacklöcher 4, 4' geschaffen werden, da ansonsten unerwünschte Durchgangslöcher resultieren würden.

Hier sind die Cu-Metalllage 1 und die Cu/Ni-Metalllage 2, 5, 6 mittels eines Lasers bearbeitet.

Durch die Gestaltung des thermoelektrischen Sensors 10 mit einem zur Bestrahlungsseite O geschlossenen Körper, findet die Strahlungsabsorption über das gesamte Wellenlängenspektrum ausschliesslich wie gewünscht auf der Bestrahlungsseite O statt.

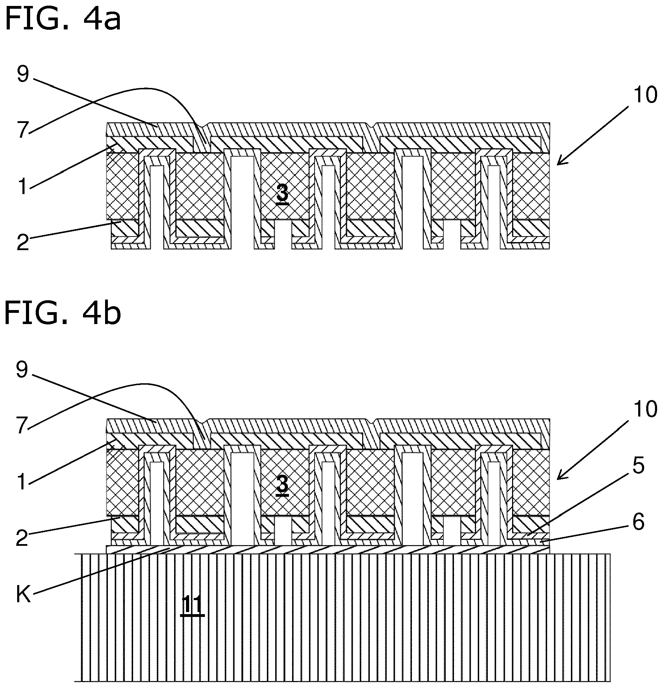

Wie in Figur 4a gezeigt, kann der thermoelektrische Sensor 10 zusätzlich durch eine Strahlungsabsorptionslage 9 bedeckt werden. Dazu wird ein entsprechendes Material auf die Bestrahlungsseite O aufgebracht, wodurch eine flächige Bedeckung des thermoelektrischen Sensors 10 samt der ersten Metalllage 1 auf der Bestrahlungsseite O erfolgt. Dem Fachmann sind geeignete Materialien für derartige Strahlungsabsorptionslagen 9, sowie Beschichtungsverfahren bekannt.

Üblicherweise wird der thermoelektrische Sensor 10 zusätzlich noch auf einem Kühlkörper 11 angeordnet. Dazu wird eine Klebeschicht K oder allgemein elektrisch isolierende Schicht K zwischen der Montageseite U des thermoelektrischen Sensors 10 und dem Kühlkörper 11 aufgebracht, mit welcher die beiden Elemente thermisch leitend verbunden werden. Klebematerialien und/oder Isolationsmaterial sollten eine möglichst hohe Wärmeleitfähigkeit aufweisen. Ein auf einem Kühlkörper stoffschlüssig fixierter thermoelektrischer Sensor 10 hat die gewünschten wärmeableitenden Eigenschaften und führt zu einem äusserst robusten Aufbau. Bei Bestrahlung des thermoelektrischen Sensors 10 mit einem Hochleistungslaser werden schnell und punktuell hohe Strahlungsleistungen auf die Bestrahlungsseite O eingestrahlt. Durch die Gestaltung des Körpers des thermoelektrischen Sensors 10, die Strahlungsabsorptionslage 9 und die Fixierung auf einem Kühlkörper 11 kann die resultierende Wärmeenergie wunschgemäss abgeleitet werden.

Die Durchmesser der ersten und zweiten Sacklöcher 4, 4' sind hier jeweils gleich gross gewählt, können aber in der Praxis unterschiedlich gewählt sein. Auch die Lagendicken der Metalllagen 1, 2, 5, 6 können auf die verwendeten Metalle abgestimmt unterschiedlich sein. Da Nickel eine geringere Leitfähigkeit besitzt, können Lagendicken von Nickellagen wesentlich grösser als die Lagendicken von Kupferlagen sein. Durch Abstimmung der Lagendicken können Messgeschwindigkeit und Sensitivität des resultierenden Strahlungssensors 10 einfach variiert werden.

Um die thermische Anbindung weiter zu verbessern, können die ersten Sacklöcher 4 vollständig mit Kupfer gefüllt werden ("via fill") und/oder mit einem Isolator gefüllt und metallisiert werden (resin via filling plus copper capping). Dem Fachmann sind aus dem Bereich der Leiterplattenherstellung Verfahren zur Erzeugung von gefüllten und/oder übermetallisierten Sacklöchern bekannt.

Um dem thermoelektrischen Sensor 10 einen Korrosionsschutz zu verleihen, kann die Bestrahlungsseite O mit einer Nickelschicht beschichtet werden, bevor die Strahlungsabsorptionslage 9 aufgebracht wird.

### Bezugszeichenliste

0 Leiterplatte
1 erste Metalllage
2 zweite Metalllage
3 Matrixlage
4 erste Sacklöcher
   40 Innenwände
4' zweite Sacklöcher
   40' Innenwände
5 dritte Metalllage/Kupferbeschichtung
6 vierte Metalllage
7 Unterbrüche / elektrische Kontaktierung in erster Metalllage
8 Unterbrüche / elektrische Kontaktierung in zweiter Metalllage

9 Strahlungsabsorptionslage
10 Thermoelektrischer Sensor
11 Kühlkörper
O Bestrahlungsseite/Sensoroberseite
U Montageseite/ Sensorunterseite
M Messübergang
Q Querrichtung
K Verbindungsschicht / Klebeschicht

## Patentansprüche

1. Thermoelektrischer Sensor (10) zur Messung von Thermospannungen mit einer Bestrahlungsseite (O) und einer Montageseite (U), umfassend eine Mehrzahl von Thermoelementen mit Messübergängen (M), welche durch Übergänge einer ersten Metalllage (1) und einer zweiten Metalllage (2) jeweils zu einer weiteren Metalllage übergehend gebildet sind, wobei die beiden Metalllagen (1, 2) eine elektrisch isolierende Matrixlage (3) sandwichartig umgeben,
**dadurch gekennzeichnet, dass**
von der Montageseite (U) eine Mehrzahl von ersten und zweiten Sacklöchern (4,4') die zweite Metalllage (2) und die Matrixlage (3) vollständig querend in Querrichtung (Q) in Richtung erster Metalllage (1) reichend angeordnet ist,
wobei die Innenwände (40) der ersten Sacklöcher (4) mit einer dritten Metalllage (5) und sukzessiv einer vierten Metalllage (6) bedeckt sind und
die Innenwände (40') der zweiten Sacklöcher (4') mit der vierten Metalllage (6) bedeckt sind,
womit der thermoelektrischer Sensor (10) mit einem zur Bestrahlungsseite (O) hin geschlossenen Körper ausgebildet ist.

2. Thermoelektrischer Sensor (10) nach Anspruch 1, wobei die Messübergänge (M) von der ersten Metalllage (1) zur vierten Metalllage (6) bzw. von der zweiten Metalllage (2) zur vierten Metalllage (6) im Körper des thermoelektrischen Sensors (10) zwischen erster Metalllage (1) und zweiter Metalllage (2) liegend ausgebildet sind.

3. Thermoelektrischer Sensor (10) nach Anspruch 1, wobei auf der Bestrahlungsseite Unterbrüche (7) zur elektrischen Kontaktierung in der ersten Metalllage (1) ausgespart sind und auf der Montageseite (U) Unterbrüche (8) die zweite Metalllage (2), die dritte Metalllage (5) und die vierte Metalllage (6) querend zur elektrischen Kontaktierung ausgespart sind.

4. Thermoelektrischer Sensor (10) nach Anspruch 3, wobei auf die Bestrahlungsseite (O) des geschlossenen Körpers, die erste Metalllage (1) und die Unterbrüche (7) zur elektrischen Kontaktierung der ersten Metalllage (1) bedeckend, direkt eine Strahlungsabsorptionslage (9) aufgebracht ist.

5. Thermoelektrischer Sensor (10) nach einem der vorhergehenden Ansprüche, wobei auf der Montageseite (U) des thermoelektrischen Sensors (10) ein Kühlkörper (11) mit einer Klebeschicht (K) aufgebracht ist.

6. Thermoelektrischer Sensor (10) nach einem der vorhergehenden Ansprüche, wobei die ersten und zweiten Sacklöcher (4, 4') teilweise in die erste Metalllage (1) hineinragend angeordnet sind.

7. Thermoelektrischer Sensor (10) nach einem der vorhergehenden Ansprüche, wobei die Durchmesser der ersten Sacklöcher (4) ungleich den Durchmessern der zweiten Sacklöcher (4') sind.

8. Thermoelektrischer Sensor (10) nach einem der vorhergehenden Ansprüche, wobei die Lagendicke der ersten Metalllage (1) grösser als die Lagendicke der zweiten Metalllage (2) und/oder die Lagendicke der vierten Metalllage (6) grösser als die Lagendicke der dritten Metalllage (5) ausgeführt ist.

9. Thermoelektrischer Sensor (10) nach einem der vorhergehenden Ansprüche, wobei als Material für die Matrixlage (3) ein hochtemperaturstabiles Polymer gewählt ist.

10. Thermoelektrischer Sensor (10) nach einem der vorhergehenden Ansprüche, wobei das Material der ersten Metalllage (1) ungleich dem Material der zweiten Metalllage (2) ist, insbesondere Nickel als Material für die erste Metalllage (1) und Kupfer als Material für die zweite Metalllage (2) gewählt ist.

11. Thermoelektrischer Sensor (10) nach einem der vorhergehenden Ansprüche, wobei Kupfer als Material für die erste Metalllage (1), die zweite Metalllage (2) und die dritte Metalllage (3) gewählt ist, während die vierte Metalllage (6) Nickel umfasst.

12. Thermoelektrischer Sensor (10) nach Anspruch 9 oder 10, wobei die Lagendicke einer Nickel umfassenden Metalllage grösser ist als die Lagendicke der Metalllagen aus Kupfer.

13. Verfahren zur Herstellung eines thermoelektrischen Sensors (10) mit einer Bestrahlungsseite (O) und einer Montageseite (U), umfassend eine Mehrzahl von Thermoelementen mit Messübergängen (M), welche durch Übergänge einer ersten Metalllage (1) und einer zweiten Metalllage (2) jeweils zu einer weiteren Metalllage übergehend gebildet sind, wobei die beiden Metalllagen (1, 2) eine elektrisch isolierende Matrixlage (3) sandwichartig umgeben,
**dadurch gekennzeichnet, dass**
ausgehend von einer Leiterplatte (0) als Matrixlage (3), welche mit der ersten Metalllage (1) auf der Bestrahlungsseite (O) und mit der zweiten Metalllage (2) auf der Montageseite (U) bedeckt ist,
in einem ersten Sacklochbohrungsschritt erste Sacklöcher (4) von der Montageseite (U) die zweite Metalllage (2) und die Matrixlage (3) vollständig querend in Querrichtung (Q) angeordnet werden, anschliessend
die zweite Metalllage (2) und die Innenwände (40) der ersten Sacklöcher (4) in einem ersten Beschichtungsschritt mit einer dritten Metalllage (5) beschichtet werden und
in einem zweiten Sacklochbohrungsschritt zweite Sacklöcher (4') von der Montageseite (U) die dritte Metalllage (5), die zweite Metalllage (2) und die Matrixlage (3) vollständig querend in Querrichtung (Q) angeordnet werden, bevor anschliessend in einem zweiten Beschichtungsschritt die dritte Metalllage (5) und die Innenwände (40') der zweiten Sacklöcher (4') mit einer vierten Metalllage (6) beschichtet werden und
Unterbrüche (7), die erste Metalllage (1) querend und Unterbrüche (8), die vierte, dritte und zweite Metalllage (6, 5, 2) querend
angebracht werden.

14. Verfahren nach Anspruch 13, wobei der geschlossene Körper des Sensors (10) nach der Anordnung der Unterbrüche (7) von der Bestrahlungsseite (O) mit einer Strahlungsabsorptionslage (9) beschichtet wird.

15. Verfahren nach einem der Ansprüche 13 oder 14, wobei nach der Anordnung der Unterbrüche (8) ein Kühlkörper (11) mittels Klebeschicht (K) auf die Montageseite (U) des Sensors (10) aufgeklebt wird.

16. Verfahren nach einem der Ansprüche 13 bis 15, wobei die ersten und zweiten Sacklöcher (4, 4') mittels mechanischem Bohren oder mittels Laserstrahlbohren erstellt werden.

17. Verfahren nach einem der Ansprüche 13 bis 16, wobei die ersten und/oder zweiten Sacklöcher (4, 4') teilweise bis in die erste Metalllage (1) führend eingebohrt werden.

## Claims

1. A thermoelectric sensor (10) for measuring thermoelectric voltages with an irradiation side (0) and an assembly side (U), comprising a plurality of thermoelements with measurement transitions (M) which are formed in each case by the transitions of a first metal layer (1) and a second metal layer (2) merging into another metal layer, wherein the two metal layers (1, 2) sandwich an electrically insulating matrix layer (3),
**characterised in that**
from the assembly side (U) a plurality of first and second blind holes (4, 4') are arranged so as to completely cross the second metal layer (2) and the matrix layer (3) in the transverse direction (Q), extending in the direction of the first metal layer (1),
wherein the internal walls (40) of the first blind holes (4) are covered by a third metal layer (5) and successively a fourth metal layer (6) and
the internal walls (40') of the second blind holes (4') are covered by the fourth metal layer (6),
whereby the thermoelectric sensor (10) is configured with a body which is closed toward the irradiation side (0).

2. The thermoelectric sensor (10) according to claim 1, wherein the measurement transitions (M) from the first metal layer (1) to the fourth metal layer (6) and/or from the second metal layer (2) to the fourth metal layer (6) are configured so as to be located in the body of the thermoelectric sensor (10) between the first metal layer (1) and the second metal layer (2).

3. The thermoelectric sensor (10) according to claim 1, wherein on the irradiation side interruptions (7) to the electrical contact are recessed in the first metal layer (1) and interruptions (8) to the electrical contact which cross the second metal layer (2), the third metal layer (5) and the fourth metal layer (6) are recessed on the assembly side (U).

4. The thermoelectric sensor (10) according to claim 3, wherein a radiation absorption layer (9) is directly applied to the irradiation side (0) of the closed body, covering the first metal layer (1) and the interruptions (7) to the electrical contact of the first metal layer (1).

5. The thermoelectric sensor (10) according to one of the preceding claims, wherein a heat sink (11) is applied by an adhesive coating (K) onto the assembly side (U) of the thermoelectric sensor (10) .

6. The thermoelectric sensor (10) according to one of the preceding claims, wherein the first and second blind holes (4, 4') are arranged so as to protrude partially into the first metal layer (1).

7. The thermoelectric sensor (10) according to one of the preceding claims, wherein the diameters of the first blind holes (4) are different from the diameters of the second blind holes (4').

8. The thermoelectric sensor (10) according to one of the preceding claims, wherein the layer thickness of the first metal layer (1) is designed to be greater than the layer thickness of the second metal layer (2) and/or the layer thickness of the fourth metal layer (6) is designed to be greater than the layer thickness of the third metal layer (5) .

9. The thermoelectric sensor (10) according to one of the preceding claims, wherein a high-temperature-stable polymer is selected as the material for the matrix layer (3).

10. The thermoelectric sensor (10) according to one of the preceding claims, wherein the material of the first metal layer (1) is different from the material of the second metal layer (2), in particular nickel is selected as the material for the first metal layer (1) and copper is selected as the material for the second metal layer (2).

11. The thermoelectric sensor (10) according to one of the preceding claims, wherein copper is selected as the material for the first metal layer (1), the second metal layer (2) and the third metal layer (3), whilst the fourth metal layer (6) comprises nickel.

12. The thermoelectric sensor (10) according to claim 9 or 10, wherein the layer thickness of a metal layer comprising nickel is greater than the layer thickness of the metal layers made of copper.

13. A method for producing a thermoelectric sensor (10) with an irradiation side (0) and an assembly side (U), comprising a plurality of thermoelements with measurement transitions (M) which are formed in each case by the transitions of a first metal (1) layer and a second metal layer (2) merging into another metal layer, wherein the two metal layers (1, 2) sandwich an electrically insulating matrix layer (3),
**characterised in that**
proceeding from a printed circuit board (0) as the matrix layer (3) which is covered by the first metal layer (1) on the irradiation side (0) and by the second metal layer (2) on the assembly side (U),
in a first blind hole boring step from the assembly side (U) first blind holes (4) are arranged so as to completely cross the second metal layer (2) and the matrix layer (3) in the transverse direction (Q), subsequently
the second metal layer (2) and the internal walls (40) of the first blind holes (4) are coated in a first coating step with a third metal layer (5) and
in a second blind hole boring step from the assembly side (U) second blind holes (4') are arranged so as to completely cross the third metal layer (5), the second metal layer (2) and the matrix layer (3) in the transverse direction (Q), before subsequently in a second coating step the third metal layer (5) and the internal walls (40') of the second blind holes (4') are coated with a fourth metal layer (6) and
interruptions (7) crossing the first metal layer (1) and
interruptions (8) crossing the fourth, third and second metal layers (6, 5, 2) are applied.

14. The method according to claim 13, wherein according to the arrangement of the interruptions (7) the closed body of the sensor (10) is coated from the irradiation side (0) with a radiation absorption layer (9).

15. The method according to one of claims 13 or 14, wherein according to the arrangement of the interruptions (8) a heat sink (11) is bonded by means of an adhesive layer (K) onto the assembly side (U) of the sensor (10).

16. The method according to one of claims 13 to 15, wherein the first and second blind holes (4, 4') are produced by means of mechanical boring or by means of laser beam boring.

17. The method according to one of claims 13 to 16, wherein the first and/or second blind holes (4, 4') are bored so as to pass partially into the first metal layer (1).

## Revendications

1. Capteur thermoélectrique (10) pour mesurer des tensions thermoélectriques avec un côté d'irradiation (0) et un côté de montage (U), comprenant une pluralité d'éléments thermoélectriques avec des jonctions de mesure (M), lesquelles sont constituées par des jonctions d'une première couche métallique (1) et d'une deuxième couche métallique (2) passant respectivement à une autre couche métallique, les deux couches métalliques (1, 2) entourant en sandwich une couche matricielle électriquement isolante (3),
**caractérisé en ce que**
du côté montage (U), une pluralité de premiers et deuxièmes trous borgnes (4, 4') est disposée atteignant la deuxième couche métallique (2) et la couche matricielle (3) en direction de la première couche métallique (1) en traversant complètement dans la direction transversale (Q),
les parois intérieures (40) des premiers trous borgnes (4) étant couvertes d'une troisième couche métallique (5) et successivement d'une quatrième couche métallique (6), et
les parois intérieures (40') des deuxièmes trous borgnes (4') étant couvertes d'une quatrième couche métallique (6),
le capteur thermoélectrique (10) étant ainsi constitué d'un corps fermé vers le côté d'irradiation (O).

2. Capteur thermoélectrique (10) selon la revendication 1, les jonctions de mesure (M) étant constituées à plat de la première couche métallique (1) à la quatrième couche métallique (6) ou de la deuxième couche métallique (2) à la quatrième couche métallique (6) dans le corps du capteur thermoélectrique (10) entre la première couche métallique (1) et la deuxième couche métallique (2).

3. Capteur thermoélectrique (10) selon la revendication 1, des interruptions (7) étant aménagées sur le côté d'irradiation pour le contact électrique dans la première couche métallique (1) et des interruptions (8) étant aménagées sur le côté montage (U) traversant la deuxième couche métallique (2), la troisième couche métallique (5), la quatrième couche métallique (6) pour le contact électrique.

4. Capteur thermoélectrique (10) selon la revendication 3, une couche d'absorption d'irradiation (9) étant directement appliquée sur le côté d'irradiation (0) du corps fermé, recouvrant la première couche métallique (1) et les interruptions (7) pour contact électrique de la première couche métallique (1).

5. Capteur thermoélectrique (10) selon l'une quelconque des revendications précédentes, un corps de refroidissement (11) avec une couche de colle (K) étant appliquée sur le côté montage (U) du capteur thermoélectrique (10).

6. Capteur thermoélectrique (10) selon l'une quelconque des revendications précédentes, les premiers et deuxièmes trous borgnes (4, 4') étant en partie disposés faisant saillie dans la première couche métallique (1).

7. Capteur thermoélectrique (10) selon l'une quelconque des revendications précédentes, le diamètre des premiers trous borgnes (4) étant inégal aux diamètres des deuxièmes trous borgnes (4').

8. Capteur thermoélectrique (10) selon l'une quelconque des revendications précédentes, l'épaisseur de couche de la première couche métallique (1) étant exécutée plus grande que l'épaisseur de couche de la deuxième couche métallique (2) et/ou l'épaisseur de couche de la quatrième couche métallique (6) étant plus grande que l'épaisseur de couche de la troisième couche métallique (5) .

9. Capteur thermoélectrique (10) selon l'une quelconque des revendications précédentes, un polymère stable aux hautes températures étant choisi comme matériau pour la couche matricielle (3) .

10. Capteur thermoélectrique (10) selon l'une quelconque des revendications précédentes, le matériau de la première couche métallique (1) étant non identique au matériau de la deuxième couche métallique (2), notamment du nickel étant choisi comme matériau pour la première couche métallique (1) et du cuivre comme matériau pour la deuxième couche métallique (2).

11. Capteur thermoélectrique (10) selon l'une quelconque des revendications précédentes, du cuivre étant choisi comme matériau pour la première couche métallique (1), la deuxième couche métallique (2) et la troisième couche métallique (3), alors que la quatrième couche métallique (6) comprend du nickel.

12. Capteur thermoélectrique (10) selon la revendication 9 ou 10, l'épaisseur de couche d'une couche métallique comprenant du nickel étant plus grande que l'épaisseur de couche des couches métalliques en cuivre.

13. Procédé de fabrication d'un capteur thermoélectrique (10) avec un côté d'irradiation (0) et un côté de montage (U), comprenant une pluralité d'éléments thermoélectriques avec des jonctions de mesure (M), lesquels sont constitués par des jonctions d'une première couche métallique (1) et d'une deuxième couche métallique (2) passant respectivement à une autre couche métallique, les deux couches métalliques (1, 2) entourant en sandwich une couche matricielle électriquement isolante (3)
**caractérisé en ce que**
partant d'une plaquette de circuits imprimés (0) en tant que couche matricielle (3), laquelle est recouverte par la première couche métallique (1) sur le côté d'irradiation (0) et par la deuxième couche métallique (2) sur le côté de montage (U),
dans une première étape de perçage de trous borgnes, les premiers trous borgnes (4) du côté montage (U) sont disposés traversant complètement la deuxième couche métallique (2) et la couche matricielle (3) dans la direction transversale (Q), ensuite
la deuxième couche métallique (2) et les parois intérieures (40) des premiers trous borgnes (4) sont revêtus dans une première étape d'enduction d'une troisième couche métallique (5), et
dans une deuxième étape de perçage de trous borgnes, des deuxièmes trous borgnes (4') du côté montage (U) sont disposés traversant complètement la troisième couche métallique (5), la deuxième couche métallique (2) et la couche matricielle (3) dans la direction transversale (Q), avant par la suite que dans une deuxième étape d'enduction la troisième couche métallique (5) et les parois intérieures (40') des deuxièmes trous borgnes (4') soient revertues d'une quatrième couche métallique (6) et
des interruptions (7) sont aménagées traversant la première couche métallique (1) et
des interruptions (8) traversant la quatrième, troisième et deuxième couche métallique (6, 5, 2).

14. Procédé selon la revendication 13, le corps fermé du capteur (10) selon la disposition des interruptions (7) étant revêtu du côté d'irradiation (0) d'une couche d'absorption d'irradiation (9).

15. Procédé selon l'une quelconque des revendications 13 ou 14, un corps de refroidissement (11) étant collé au moyen d'une couche de colle (K) sur le côté montage (U) du capteur (10) selon la disposition des interruptions (8).

16. Procédé selon l'une quelconque des revendications 13 à 15, les premiers et deuxièmes trous borgnes (4, 4') étant réalisés au moyen d'un perçage mécanique ou au moyen d'un perçage à rayon laser.

17. Procédé selon l'une quelconque des revendications 13 à 16, les premiers et/ou deuxièmes trous borgnes (4, 4') étant percés passant en partie jusque dans la première couche métallique (1).
